# EUROPEAN PATENT SPECIFICATION

(11) **EP 1 537 809 B1**
(45) Date of publication and mention of the grant of the patent: **28.03.2007**
(21) Application number: 04257471.5
(22) Date of filing: 01.12.2004
(51) Int. Cl.: A47J 31/30, A47J 37/12

(54) **Beverage makers**
Getränkezubereitungsvorrichtung
Appareil de preparation de boissons

(30) Priority: 05.12.2003 GB 0328217
(43) Date of publication of application: 08.06.2005
(73) Proprietor: STRIX LIMITED, Ronaldsway, Isle of Man IM9 2RG (GB)
(72) Inventor: Ashton, Steven Anthony, Laxey Isle of Man IM4 7NR (GB)
(74) Representative: Samuels, Adrian James

(56) References cited:
- EP-A- 1 232 709
- EP-A- 1 445 985
- FR-A- 2 806 283
- IT-B- 443 477

## Description

This invention relates to beverage makers, particularly but not exclusively coffee makers such as espresso or Moca makers.

Moca coffee makers are well known. They generally comprise a lower water boiling vessel separated from an upper vessel by a basket which holds the coffee grounds. As water in the lower vessel boils, the pressure inside the vessel increases and forces the boiling water up the tube and through the coffee grounds.

Traditional Moca makers were made by casting the lower vessel as a single pot, the device being heated in use by placing it on a stove. IT-A-443477 discloses a stove-top coffee maker having the features included in the pre-amble of claim 1. More recently, various proposals for electrically heated Moca makers have been made, e.g. the arrangement taught in the Applicant's EP-A-1232709.

The Applicants have however, recognised a problem with current Moca makers. As there is necessarily a gap between the end of the vertical tube and the heated base of the lower vessel there is a stage during use of the device after the water level in the lower vessel has fallen below the end of the tube when instead of forcing boiling water up the tube, pressure in the vessel forces steam up the tube. It has been recognised that this steam has a damaging effect on the flavour of the coffee causing a change in its flavour which is often described as a burnt taste. This is clearly undesirable. This state of affairs may potentially continue until all of the remaining water in the lower vessel has been boiled off.

With a typical three millimetre gap between the heated base of the lower vessel and the end of the tube and with a typical surface area of 6,000 mm², the volume of water which must be evaporated before the lower vessel boils dry will be 18,000 cubic millimetres or 18 cubic centimetres of water.

Although the aforementioned problem may be avoided by removing the source of heat before the last few millimetres of water have boiled, this requires careful attendance to the device during operation and is even then difficult to judge properly.

It is an aim of the present invention to provide a beverage maker in which the problem mentioned above is at least partially alleviated.

The present invention provides a beverage maker comprising: a lower, water boiling vessel; a funnel extending into the lower vessel and having an upper compartment for receiving beverage solids; and an upper vessel mounted over said funnel to receive water which has passed up said funnel through said compartment and from which the beverage is dispensed, characterised in that the base of the lower vessel has a low region beneath the lower end of the funnel such that as the lower vessel boils dry, water preferentially remains in the low region, said low region being defined by a discrete recess provided in the base of the lower vessel.

Thus it will be seen by those skilled in the art that in accordance with the present invention part of the base is lower to cause water to collect there. This reduces the overall volume contained in the last few millimetres of water and so reduces the amount of time during which steam is forced up the tube after the end of the tube has been exposed. The tendency for the taste of coffee or a similar beverage to be spoiled by contact with steam is therefore correspondingly reduced.

Since in traditional Moca maker designs the funnel tube is on the central axis of the device, the low region is preferably at the centre of the base, although this is not essential.

The base is provided with a discrete recess defining the low region. Such a recess will therefore form a shallow sump. The recess may give an advantage whatever proportion of the area of the base it occupies since the volume of water which must be evaporated during the steam phase will be reduced proportionally. In preferred embodiments the recess is between approximately 2% and 25% of the area of the base. The remainder of the base may be flat, but in some preferred embodiments at least part of the base outside the recess is tilted towards the recess to encourage water to collect in the recess. In particularly preferred embodiments, a slope of approximately 2-3° in the base is provided.

The size of the recess is preferably chosen so as to be slightly larger than the width of the funnel tube.

The principles of the invention may be applied to beverage makers regardless of the method of heating applied. Thus, the base could be the base of an integrally cast pot heated on a stove top as is conventional in the art. Alternatively it may be provided with an electric heater such as a sheathed heating element on the underside of a die cast base. In particularly preferred embodiments, however, the lower vessel comprises an opening in its base which is closed by a so called plate heater having the features of the present invention. Such a heater would normally be provided with a sheathed heating element mounted to or formed with the underside thereof although it is also envisaged that a thick film heater could be employed. It will be apparent to those skilled in the art that the term "plate heater" as used herein is simply used as a general reference to a type of heater and is not intended to suggest any limitation as to the shape of the heating surface of such a heater. In particular, the term plate heater is intended to encompass heaters which may be dished or have recesses and/or sloping portions as set out hereinabove.

Preferably there is provided a plate heater comprising a recess on its heating surface arranged in use preferentially to collect water, wherein the maximum horizontal extent of said recess is at least twice its depth.

The advantages associated with a plate heater having a shallow recess as defined above will be appreciated from the foregoing discussion of the invention.

Certain preferred embodiments of the invention will now be described, by way of example only, with reference to the accompanying drawings in which:
Fig. 1 is a sectional view of a traditional stove top Moca maker adapted in accordance with the present invention;
Fig. 2 is a sectional view with enlarged portion of a second embodiment of the invention with a die-cast heater plate;
Fig. 3 is a sectional view with enlarged portion of a Moca maker having a plate heater; and
Fig. 3a is an enlarged partial view of the heater plate of Fig. 3.

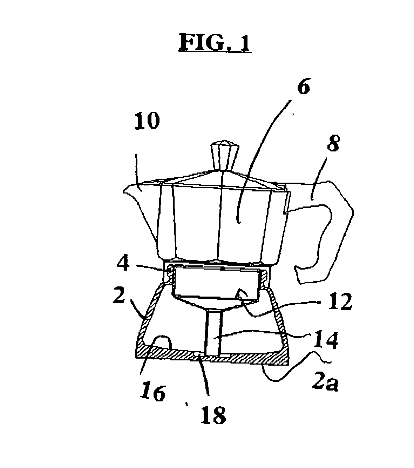

Turning to Fig. 1, there may be seen a Moca type coffee maker in accordance with the invention. As is well known in the art, the Moca maker generally comprises a lower vessel in the form of an integrally die-cast aluminium pot 2 which has an external screwthread 4 on its upper rim for removably attaching an upper vessel 6 having a handle 8 and a spout 10.

The bottom 2a of the lower vessel is flat to allow the device to be placed on a stove top. The interior surface of the base 16 is gently sloped at an angle of approximately 2-3° towards its centre. At the centre of the base is provided a stepped recess 18 approximately 5mm deep and 13mm in diameter.

A funnel member 12 is received in the neck of the lower vessel 2 so that its vertical tube 14 is directly above the recess 18 in the base. Although not clearly visible in the Figure, there is a gap of approximately 3mm between the lower end of the tube 14 and the bottom of the recess 18. This means that the end of the tube 14 is lower than the rest of the base 16.

In use of the device in Fig. 1, the user first separates the upper and lower vessels 2,6 by unscrewing them, removes the funnel and fills the lower vessel 2 with water to the appropriate height. The user then replaces the funnel 12 in the lower vessel so that the end of the vertical tube 14 is immersed in the water and places coffee grounds in the basket. The user then screws on the upper vessel 6 until a tight seal is formed. The whole device is then placed on a stove and thereby heated from underneath.

As water in the lower vessel 2 boils pressure in the vessel forces the water up the vertical tube 14 and through the coffee grounds in the upper compartment of the funnel 12. When almost all of the water in the lower vessel has evaporated, the remainder will be collected in the recess 18. As this remaining water evaporates, the end of the tube 14 will eventually become exposed and so pressure in the vessel will force steam up the tube 14. However, by the time the end of the tube 14 is exposed, only a very small volume of water remains in the recess to be evaporated.

In one particular example if the gap between the end of the tube 14 and the bottom of the recess 18 is 3mm and the recess is circular with a diameter of 13mm, only 400 cubic millimetres or 0.4 cubic centimetres of water will remain. This should be contrasted with the prior art example given earlier where for the same gap between the end of the tube and the base a volume of 18 cubic centimetres remains to be evaporated. The potential for the taste of the coffee to be spoilt is therefore dramatically reduced in accordance with the invention.

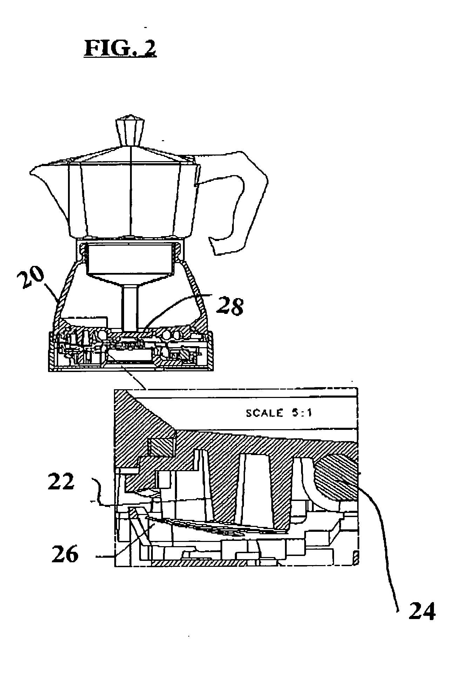

Fig. 2 shows a second embodiment of the invention. In this embodiment the lower vessel 20 is open at its base which opening is closed by a die-cast heater plate 22 which is more clearly visible in the enlarged portion. The die-cast heater plate 22 is provided with an integrated electric heating element 24 by which it may be heated. A thermo-mechanical control unit for supplying power to the heating element 24 and protecting it against overheating is provided below the heater plate 22. Any suitable control arrangement could be used although in the presently preferred embodiment it is the Applicant's U44 series of control units. One of the bimetallic actuators 26 of the control unit is visible in the enlarged portion of Fig. 2 from which it may be seen that it is in good thermal contact with a projecting portion of the heater plate.

As in the previous embodiment, the interior surface of the base 22 is sloped towards the centre where there is provided a recess 28. This embodiment works in exactly the same way as the previous one except that electrical power provides the heat rather than the device being placed on a stove. Once all of the water in the lower vessel has evaporated, the heating element 24 will begin to overheat and the supply of power to it will therefore be interrupted by the control unit.

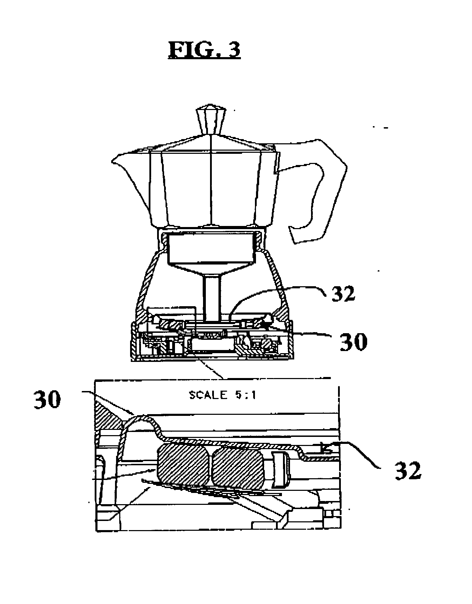

Fig. 3 shows a further embodiment of the invention. This embodiment is similar to that of Fig. 2 except that the opening in the base of the lower vessel is closed by a stainless steel plate heater 30 in the manner taught in EP-A-1232709. It will also be seen that the recess 32 in this embodiment is larger than in the previous embodiments. It could, for example, be up to 25% of the area of the base.

## Claims

1. A beverage maker comprising:
a lower, water boiling vessel (2);
a funnel (12) extending into the lower vessel (2) and having an upper compartment for receiving beverage solids; and
an upper vessel (6) mounted over said funnel (12) to receive water which has passed up said funnel (12) through said compartment and from which the beverage is dispensed, **characterised in that** the base (16) of the lower vessel (2) has a low region beneath the lower end of the funnel (12) such that as the lower vessel (2) boils dry, water preferentially remains in the low region, said low region being defined by a discrete recess (18) provided in the base (16) of the lower vessel (2).

2. A beverage maker as claimed in claim 1 wherein said recess (18) is between approximately 2% and 25% of the area of the base (16).

3. A beverage maker as claimed in claim 1 or 2 wherein at least part of the base (16) outside the recess (18) is tilted towards the recess (18) to encourage water to collect in the recess (18).

4. A beverage maker as claimed in claim 3 wherein a slope of approximately 2-3° is provided in the base (16).

5. A beverage maker as claimed in any of claims 2-4 wherein the recess (18) is slightly larger than the width of said funnel (12).

6. A beverage maker as claimed in any preceding claim wherein the lower vessel (2) comprises an opening in its base (16) which is closed by a plate heater thereby forming said base (16).

## Patentansprüche

1. Getränkezubereitungsvorrichtung, umfassend:
ein unteres Wasserkochgefäß (2),
ein Trichterelement (12), das sich in das untere Gefäß (2) erstreckt und das einen oberen Raum zur Aufnahme von Getränkefeststoffen aufweist, und
ein oberes Gefäß (6), welches über dem Trichterelement (12) angeordnet ist, um Wasser aufzunehmen, das das Trichterelement (12) durch den Raum hindurch passiert hat, und aus welchem das Getränk abgegeben wird, **dadurch gekennzeichnet, dass** die Basis (16) des unteren Gefäßes (2) einen unteren Bereich unterhalb des unteren Endes des Trichterelementes (12) aufweist, derart, dass dann, wenn das untere Gefäß (2) trocken kocht, Wasser vorzugsweise in dem unteren Bereich verbleibt, wobei der untere Bereich durch eine gesonderte Vertiefung (18) definiert ist, die in der Basis (16) des unteren Gefäßes (2) vorgesehen ist.

2. Getränkezubereitungsvorrichtung nach Anspruch 1, wobei die Vertiefung (18) zwischen ungefähr 2% und 25% der Fläche der Basis (16) einnimmt.

3. Getränkezubereitungsvorrichtung nach Anspruch 1 oder 2, wobei wenigstens ein Teil der Basis (16) außerhalb der Vertiefung (18) zu der Vertiefung (18) hin geneigt ist, um das Sammeln von Wasser in der Vertiefung (18) zu fördern.

4. Getränkezubereitungsvorrichtung nach Anspruch 3, wobei eine Neigung von ungefähr 2 bis 3° in der Basis (16) vorgesehen ist.

5. Getränkezubereitungsvorrichtung nach einem der Ansprüche 2 bis 4, wobei die Vertiefung (18) geringfügig größer ist als die Breite des Trichterelementes (12).

6. Getränkezubereitungsvorrichtung nach einem der vorangehenden Ansprüche, wobei das untere Gefäß (2) eine Öffnung in seiner Basis (16) aufweist, welche durch eine Plattenheizeinheit geschlossen ist, wodurch die Basis (16) gebildet ist.

## Revendications

1. Appareil de préparation de boisson comprenant :
un récipient inférieur pour faire bouillir de l'eau (2) ;
un entonnoir (12) s'étendant dans le récipient inférieur (2) et ayant un compartiment supérieur pour recevoir les solides de la boisson ; et
un récipient supérieur (6) monté sur ledit entonnoir (12) pour recevoir l'eau qui est montée dans ledit entonnoir (12) en passant par ledit compartiment et à partir duquel la boisson est distribuée, **caractérisé en ce que** la base (16) du récipient inférieur (2) a une région inférieure au-dessous de l'extrémité inférieure de l'entonnoir (12) de sorte que lorsque l'eau s'est évaporée en bouillant du récipient inférieur (2), l'eau reste de préférence dans la région inférieure, ladite région inférieure étant définie par un évidement discret (18) prévu dans la base (16) du récipient inférieur (2).

2. Appareil de préparation de boisson selon la revendication 1, dans lequel ledit évidement (18) représente entre approximativement 2 % et 25 % de la surface de la base (16).

3. Appareil de préparation de boisson selon la revendication 1 ou 2, dans lequel au moins une partie de la base (16) à l'extérieur de l'évidement (18) est inclinée vers l'évidement (18) pour encourager la collecte de l'eau dans l'évidement (18).

4. Appareil de préparation de boisson selon la revendication 3, dans lequel on prévoit une inclinaison d'approximativement 2° à 3° dans la base (16).

5. Appareil de préparation de boisson selon l'une quelconque des revendications 2 à 4, dans lequel l'évidement (18) est légèrement plus grand que la largeur dudit entonnoir (12).

6. Appareil de préparation de boisson selon l'une quelconque des revendications précédentes, dans lequel le récipient inférieur (2) comprend une ouverture dans sa base (16) qui est fermée par un réchauffeur à plaques formant ainsi ladite base (16).
